# EUROPEAN PATENT APPLICATION

(11) **EP 4 421 912 A1**
(43) Date of publication of application: **28.08.2024**
(21) Application number: 24153181.3
(22) Date of filing: 22.01.2024
(51) Int. Cl.: H01M 4/50, H01M 4/66, H01M 10/04, H01M 10/0525, H01M 10/0587, H01M 50/534

(54) **NONAQUEOUS ELECTROLYTE SOLUTION SECONDARY BATTERY**

(30) Priority: 27.02.2023 JP 2023028713
(71) Applicant: Prime Planet Energy & Solutions, Inc., Chuo-ku Tokyo 103-0022 (JP)
(72) Inventor: TSUKAMOTO, Kentaro, Tokyo, 103-0022 (JP)
(74) Representative: Kuhnen & Wacker Patent- und Rechtsanwaltsbüro PartG mbB

(57) **Abstract**

A nonaqueous electrolyte solution secondary battery (100) disclosed herein includes a wound electrode body (20) including a positive electrode (22) with a band shape and a negative electrode (24) with a band shape. The negative electrode (24) includes a negative electrode active material layer (24a). The negative electrode active material layer (24a) includes a first high-resistance region (A1) extending from one end part toward a central part in a winding axis direction (Y) and having a resistance value that is 1.5 times or more higher than that in a periphery. When a length of the negative electrode active material layer (24a) is La and a length of the first high-resistance region (A1) is L1 in the winding axis direction (Y), a ratio (L1/La) of the length L1 to the length La is 0.35 or less.

## Description

### BACKGROUND OF THE DISCLOSURE

### 1. Field

The present disclosure relates to a nonaqueous electrolyte solution secondary battery.

### 2. Background

A nonaqueous electrolyte solution secondary battery that includes: a wound electrode body in which a positive electrode with a band shape and a negative electrode with a band shape are stacked across a separator with a band shape and wound; a nonaqueous electrolyte solution; a battery case that accommodates the wound electrode body and the nonaqueous electrolyte solution; a positive electrode terminal that is electrically connected to the positive electrode through a positive electrode current collecting part; and a negative electrode terminal that is electrically connected to the negative electrode through a negative electrode current collecting part has been known conventionally. Conventional technical literatures related to this include Japanese Patent Application Publication No. 2022-127950 and Japanese Patent Application Publication No. 2014-41744.

For example, according to Japanese Patent Application Publication No. 2022-127950, a plurality of negative electrode tabs are provided at one end part of a wound electrode body in a winding axis direction and the plurality of negative electrode tabs are connected to a negative electrode current collecting part in a state of being stacked and bent, so that a battery can be reduced in size and have improved volume energy density.

### SUMMARY

According to the present inventor's examination, however, from a viewpoint of reducing the resistance of a negative electrode active material layer, there is still room for improvement in the aforementioned technique. That is to say, in the nonaqueous electrolyte solution secondary battery, a part of the nonaqueous electrolyte solution is normally decomposed at initial charging and a film including a decomposition product thereof (solid electrolyte interface film: SEI film) is formed on a surface of the negative electrode active material layer. By this film, an interface between the negative electrode active material layer and the nonaqueous electrolyte solution is stabilized. In the wound electrode body, however, the nonaqueous electrolyte solution is supplied from only both end parts thereof in the winding axis direction. Thus, in the wound electrode body with higher capacity in recent years in particular, the nonaqueous electrolyte solution permeates less easily into a central part in the winding axis direction. As a result, in the central part in the winding axis direction, the film is formed less easily at the initial charging, and the central part tends to have high resistance.

Moreover, according to the present inventor's examination, when the plurality of negative electrode tabs in a state of being stacked and bent are connected to the negative electrode current collecting part as described in Japanese Patent Application Publication No. 2022-127950, for example, a stripe-shaped high-resistance region may be formed in the negative electrode active material layer from an end part on a side where the negative electrode tabs are provided toward a central part in the winding axis direction. If this high-resistance region extends long in the winding axis direction and reaches the central part, the high-resistance region may overlap with a high-resistance part of the central part described above, in which case a region with very high resistance (ultrahigh-resistance region) may be formed. This may result in a drastic decrease in battery characteristic.

The present disclosure has been made in view of the above circumstances, and an object is to provide a nonaqueous electrolyte solution secondary battery in which formation of an ultrahigh-resistance region in a negative electrode active material layer is suppressed.

A nonaqueous electrolyte solution secondary battery according to the present disclosure includes: a wound electrode body in which a positive electrode with a band shape and a negative electrode with a band shape are stacked across a separator with a band shape and wound; a nonaqueous electrolyte solution; a battery case that accommodates the wound electrode body and the nonaqueous electrolyte solution; a positive electrode terminal that is electrically connected to the positive electrode through a positive electrode current collecting part; and a negative electrode terminal that is electrically connected to the negative electrode through a negative electrode current collecting part. The negative electrode includes a negative electrode active material layer including a negative electrode active material, and a plurality of negative electrode tabs provided at one end part in a winding axis direction. The plurality of negative electrode tabs are connected to the negative electrode current collecting part in a state of being stacked and bent. The negative electrode active material layer includes a first high-resistance region extending from the one end part toward a central part in the winding axis direction and having a resistance value that is 1.5 times or more higher than that in a periphery. When a length of the negative electrode active material layer is La and a length of the first high-resistance region is L1 in the winding axis direction, a ratio (L1/La) of the length L1 of the first high-resistance region to the length La of the negative electrode active material layer is 0.35 or less.

When the ratio (L1/La) is a predetermined value or less, it is possible to prevent the first high-resistance region from reaching the central part in the winding axis direction. Thus, the first high-resistance region does not easily overlap with another high-resistance part formed at the central part in the winding axis direction, so that the formation of the ultrahigh-resistance region can be suppressed. Accordingly, the drastic decrease in battery characteristic can be suppressed.

The above and other elements, features, steps, characteristics and advantages of the present disclosure will become more apparent from the following detailed description of the preferred embodiments with reference to the attached drawings.

### BRIEF DESCRIPTION OF THE DRAWINGS

FIG. 1 is a perspective view schematically illustrating a nonaqueous electrolyte solution secondary battery according to an embodiment;
FIG. 2 is a schematic longitudinal cross-sectional view taken along line II-II in FIG. 1;
FIG. 3 is a schematic lateral cross-sectional view taken along line III-III in FIG. 1;
FIG. 4 is a perspective view schematically illustrating an electrode body group attached to a sealing plate;
FIG. 5 is a perspective view schematically illustrating a wound electrode body;
FIG. 6 is a schematic view illustrating a structure of the wound electrode body;
FIG. 7 is a schematic plan view of a negative electrode for 1.5 turns;
FIG. 8 is a side view schematically illustrating a positional relation between a battery assembly and a pressing member in an initial charging step; and
FIG. 9A is a graph expressing a relation between a measurement position and a resistance ratio in Example 1 and FIG. 9B is a graph expressing a relation between a measurement position and a resistance ratio in Example 3.

### DETAILED DESCRIPTION OF THE PREFERRED EMBODIMENTS

Hereinafter, some preferred embodiments of the art disclosed herein will be described with reference to the drawings. Note that matters other than matters particularly mentioned in the present specification and necessary for the implementation of the present disclosure (for example, the general configuration and manufacturing process of a nonaqueous electrolyte solution secondary battery that do not characterize the present disclosure) can be grasped as design matters of those skilled in the art based on the prior art in the relevant field. The present disclosure can be implemented on the basis of the disclosure of the present specification and common technical knowledge in the relevant field. Note that in the present specification, the notation "A to B" for a range signifies a value more than or equal to A and less than or equal to B, and is meant to encompass also the meaning of being "more than A" and "less than B".

In the present specification, the term "nonaqueous electrolyte solution secondary battery" refers to a general power storage device capable of being repeatedly charged and discharged by transfer of charge carriers between a positive electrode and a negative electrode through a nonaqueous electrolyte solution. The nonaqueous electrolyte solution secondary battery refers to a concept that encompasses a so-called storage battery such as a lithium ion secondary battery, and a capacitor such as a lithium ion capacitor and an electric double-layer capacitor.

### <Battery 100>

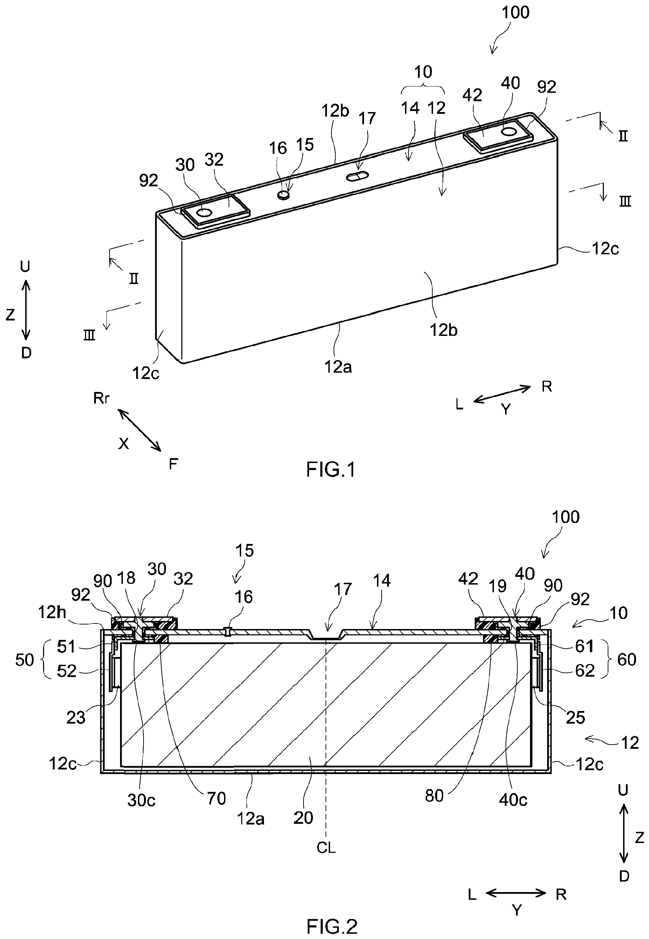

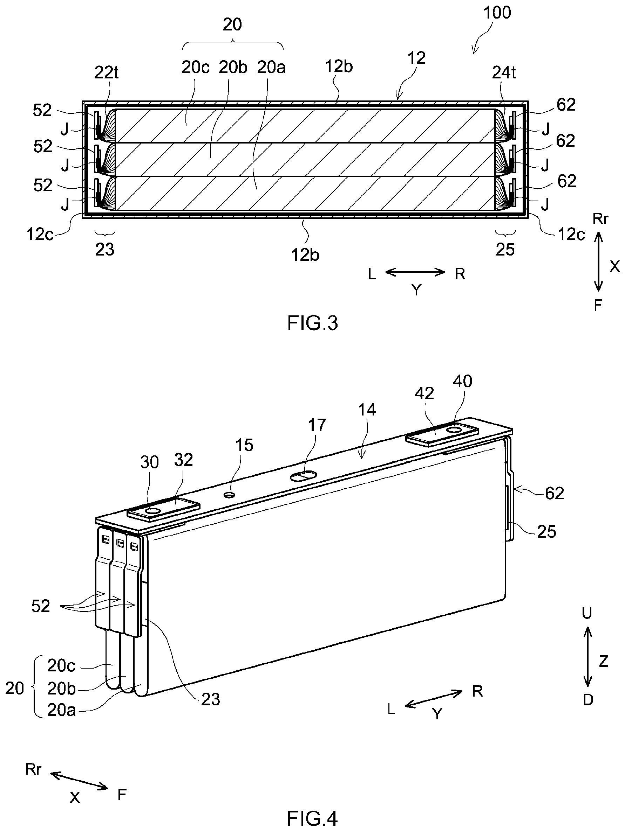

FIG. 1 is a perspective view of a nonaqueous electrolyte solution secondary battery (hereinafter, also referred to as a battery simply) 100. FIG. 2 is a schematic longitudinal cross-sectional view taken along line II-II in FIG. 1. FIG. 3 is a schematic lateral cross-sectional view taken along line III-III in FIG. 1. In the following description, reference signs L, R, F, Rr, U, and D in the drawings respectively denote left, right, front, rear, up, and down, and reference signs X, Y, and Z in the drawings respectively denote a short side direction of the battery 100, a long side direction that is orthogonal to the short side direction, and an up-down direction that is orthogonal to the short side direction and the long side direction. These directions are defined however for convenience of explanation, and do not limit the manner in which the battery 100 is disposed.

As illustrated in FIG. 2, the battery 100 includes a battery case 10, an electrode body group 20, a positive electrode terminal 30, a negative electrode terminal 40, a positive electrode current collecting part 50, a negative electrode current collecting part 60, a positive electrode insulating member 70, a negative electrode insulating member 80, and a nonaqueous electrolyte solution (not illustrated). The battery 100 is a lithium ion secondary battery here. The battery 100 is preferably the lithium ion secondary battery.

The battery case 10 is a housing that accommodates the electrode body group 20 and the nonaqueous electrolyte solution. As illustrated in FIG. 1, the external shape of the battery case 10 here is a flat and bottomed cuboid shape (rectangular shape). A conventionally used material can be used for the battery case 10, without particular limitations. The battery case 10 is preferably made of a metal, and for example, more preferably made of aluminum, an aluminum alloy, iron, an iron alloy, or the like. As illustrated in FIG. 2, the battery case 10 includes an exterior body 12 having an opening 12h, and a sealing plate (lid body) 14 that covers the opening 12h. The battery case 10 preferably includes the exterior body 12 and the sealing plate 14.

As illustrated in FIG. 1, the exterior body 12 includes a bottom wall 12a with a substantially rectangular shape, a pair of long side walls 12b extending from long sides of the bottom wall 12a and facing each other, and a pair of short side walls 12c extending from short sides of the bottom wall 12a and facing each other. The bottom wall 12a faces the opening 12h. The long side wall 12b is larger in area than the short side wall 12c. Note that in the present specification, the term "substantially rectangular shape" encompasses, in addition to a perfect rectangular shape (rectangle), for example, a shape whose corner connecting a long side and a short side of the rectangular shape is rounded, a shape whose corner includes a notch, and the like.

As illustrated in FIG. 1, the sealing plate 14 is substantially rectangular in shape in a plan view. As illustrated in FIG. 2, the sealing plate 14 is attached to the exterior body 12 so as to cover the opening 12h of the exterior body 12. The sealing plate 14 faces the bottom wall 12a of the exterior body 12. The battery case 10 is unified in a manner that the sealing plate 14 is joined (for example, joined by welding) to a periphery of the opening 12h of the exterior body 12. The battery case 10 is hermetically sealed (closed).

As illustrated in FIG. 2, the sealing plate 14 is provided with a liquid injection hole 15, a gas discharge valve 17, and two terminal extraction holes 18 and 19. The liquid injection hole 15 is a hole for injecting the nonaqueous electrolyte solution after the sealing plate 14 is assembled to the exterior body 12. The sealing plate 14 is preferably provided with the liquid injection hole 15. The liquid injection hole 15 is sealed by a sealing member 16. The gas discharge valve 17 is configured to break when pressure inside the battery case 10 reaches a predetermined value or more and discharge a gas in the battery case 10 to the outside. The terminal extraction holes 18 and 19 are formed in both end parts of the sealing plate 14 in the long side direction Y (left end part and right end part in FIG. 2, respectively). The terminal extraction holes 18 and 19 penetrate the sealing plate 14 in a thickness direction (up-down direction Z). The terminal extraction holes 18 and 19 respectively have the inner diameters that enable penetration of the positive electrode terminal 30 and the negative electrode terminal 40 before the electrode terminals are attached to the sealing plate 14 (before a caulking process).

Each of the positive electrode terminal 30 and the negative electrode terminal 40 is fixed to the sealing plate 14 of the battery case 10. The positive electrode terminal 30 is disposed on one side of the sealing plate 14 in the long side direction Y (left side in FIG. 1 and FIG. 2). The negative electrode terminal 40 is disposed on the other side of the sealing plate 14 in the long side direction Y (right side in FIG. 1 and FIG. 2). As illustrated in FIG. 2, the positive electrode terminal 30 is inserted to the terminal extraction hole 18 and extends to the outside from the inside of the sealing plate 14, and the negative electrode terminal 40 is inserted to the terminal extraction hole 19 and extends to the outside from the inside of the sealing plate 14. The positive electrode terminal 30 and the negative electrode terminal 40 are preferably attached to the sealing plate 14. The positive electrode terminal 30 and the negative electrode terminal 40 are here caulked to a peripheral part of the sealing plate 14 that surrounds the terminal extraction holes 18 and 19 by the caulking process. Caulking parts 30c and 40c are formed at an end part of the positive electrode terminal 30 and the negative electrode terminal 40 on the exterior body 12 side (lower end part in FIG. 2).

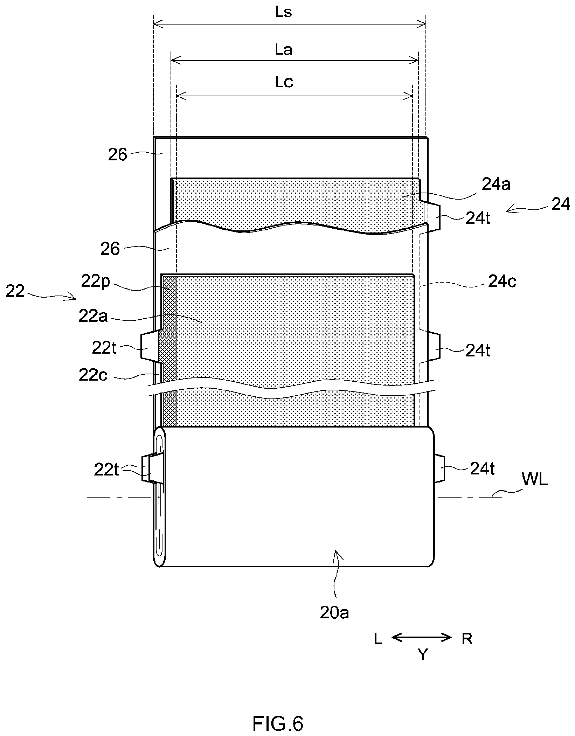

As illustrated in FIG. 2, the positive electrode terminal 30 is electrically connected to a positive electrode 22 (see FIG. 6, in detail, positive electrode tab group 23) of the electrode body group 20 through the positive electrode current collecting part 50 inside the battery case 10. The positive electrode terminal 30 is insulated from the sealing plate 14 by the positive electrode insulating member 70 and a gasket 90. The positive electrode terminal 30 is preferably formed of a metal and is more preferably formed of, for example, aluminum or an aluminum alloy.

The negative electrode terminal 40 is electrically connected to a negative electrode 24 (see FIG. 6, in detail, negative electrode tab group 25) of the electrode body group 20 through the negative electrode current collecting part 60 inside the battery case 10. The negative electrode terminal 40 is insulated from the sealing plate 14 by the negative electrode insulating member 80 and the gasket 90. The negative electrode terminal 40 is preferably formed of a metal and is more preferably formed of, for example, copper or a copper alloy. The negative electrode terminal 40 may be configured of two conductive members joined together and integrated. In the negative electrode terminal 40, for example, a part connected to the negative electrode current collecting part 60 may be formed of copper or a copper alloy, and a part exposed on an outer surface of the sealing plate 14 may be formed of aluminum or an aluminum alloy.

A positive electrode external conductive member 32 and a negative electrode external conductive member 42, each having a plate shape, are attached to the outer surface of the sealing plate 14. The positive electrode external conductive member 32 and the negative electrode external conductive member 42 are members to which a busbar is attached when a plurality of the batteries 100 are electrically connected to each other. The positive electrode external conductive member 32 is electrically connected to the positive electrode terminal 30. The negative electrode external conductive member 42 is electrically connected to the negative electrode terminal 40. The positive electrode external conductive member 32 and the negative electrode external conductive member 42 are insulated from the sealing plate 14 by an external resin member 92. The positive electrode external conductive member 32 and the negative electrode external conductive member 42 are preferably formed of a metal and are more preferably formed of, for example, aluminum or an aluminum alloy. However, the positive electrode external conductive member 32 and the negative electrode external conductive member 42 are not always necessary and can be omitted in another embodiment.

As illustrated in FIG. 2, the electrode body group 20 is accommodated inside the battery case 10 (in detail, inside the exterior body 12). FIG. 4 is a perspective view schematically illustrating the electrode body group 20 attached to the sealing plate 14. The electrode body group 20 here includes three wound electrode bodies 20a, 20b, and 20c. The number of wound electrode bodies to be disposed in one battery case 10 is, however, not limited in particular and may be two or more (plural), or one. The electrode body group 20 may be disposed inside the battery case 10 in a state of being covered with an electrode body holder with an insulating property. In other words, the electrode body holder may exist between the electrode body group 20 and the battery case 10 (in detail, exterior body 12). The electrode body holder is preferably made of resin.

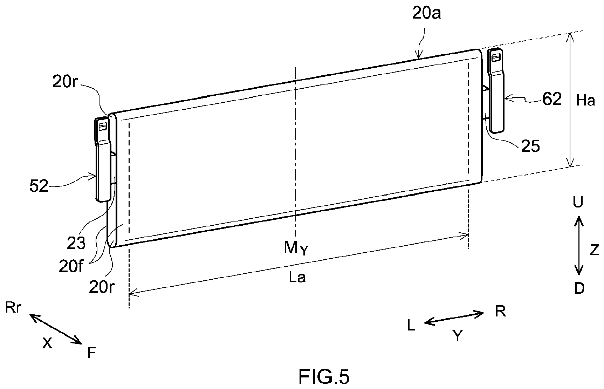

FIG. 5 is a perspective view schematically illustrating the wound electrode body 20a. FIG. 6 is a schematic view illustrating a structure of the wound electrode body 20a. Although detailed description will be given below with the wound electrode body 20a as an example, the wound electrode bodies 20b and 20c can also be configured in the similar manner. As illustrated in FIG. 6, the wound electrode body 20a has a structure in which the positive electrode 22 with a band shape and the negative electrode 24 with a band shape are stacked across a separator 26 with a band shape and wound using a winding axis WL as a center. Although not limited in particular, the number of winding turns (the number of turns) of the wound electrode body 20a is preferably 20 turns or more, more preferably 30 turns or more, and still more preferably 50 turns or more, and may be 150 turns or less and 100 turns or less, for example.

As illustrated in FIG. 2 and FIG. 6, the wound electrode body 20a here is disposed inside the battery case 10 in a direction in which the winding axis WL is substantially parallel to the long side direction Y The winding axis WL direction is a direction that coincides with the long side direction Y here. The wound electrode body 20a is disposed inside the battery case 10 in a direction in which the winding axis WL is parallel to the bottom wall 12a and orthogonal to the short side wall 12c. The battery 100 here has a so-called lateral tab structure in which the positive electrode tab group 23 and the negative electrode tab group 25 exist on both ends of the wound electrode body 20a in the winding axis WL direction (left and right in FIG. 2 and FIG. 4). In another embodiment, however, the battery 100 may have a so-called upper tab structure in which the positive electrode tab group 23 and the negative electrode tab group 25 exist on one end of the wound electrode body 20a in the winding axis WL direction (for example, upper end in FIG. 2 and FIG. 4). In this case, the winding axis WL direction may be a direction that coincides with the up-down direction Z.

As illustrated in FIG. 5, the external shape of the wound electrode body 20a is a flat shape. The external shape of the wound electrode body 20a is preferably a flat shape. The wound electrode body 20a includes a pair of flat parts 20f expanding along the long side direction Y (the winding axis WL direction), and a pair of curved parts (R parts) 20r coupling the pair of flat parts 20f. The flat part 20f includes a flat outer surface (YZ plane in FIG. 5). The curved part 20r includes a curved outer surface. Note that in the present specification, "flat outer surface" is not limited to a perfectly flat surface, and is a term that encompasses a case in which a small step, curve, concave part, convex part, or the like is included when viewed microscopically, for example.

As illustrated in FIG. 2 and FIG. 5, the pair of flat parts 20f face the pair of long side walls 12b of the exterior body 12. The flat part 20f extends along the long side wall 12b. The pair of curved parts 20r face the bottom wall 12a of the exterior body 12 and the sealing plate 14. The wound electrode body 20a is preferably disposed inside the battery case 10 in a manner that the stacking direction (thickness direction) of the positive electrode 22 (see FIG. 6) and the negative electrode 24 (see FIG. 6) in the flat part 20f coincides with the short side direction X (direction perpendicular to the long side wall 12b), as described in this embodiment.

The positive electrode 22 may be similar to the conventional positive electrode, without particular limitations. As illustrated in FIG. 6, the positive electrode 22 includes a positive electrode current collector 22c, and a positive electrode active material layer 22a and a positive electrode protection layer 22p that are fixed on at least one surface of the positive electrode current collector 22c. However, the positive electrode protection layer 22p is not essential, and can be omitted in another embodiment. The positive electrode current collector 22c has a band shape. The positive electrode current collector 22c is formed of, for example, a conductive metal such as aluminum, an aluminum alloy, nickel, or stainless steel. Here, the positive electrode current collector 22c is a metal foil, specifically an aluminum foil.

At one end part of the positive electrode current collector 22c in the long side direction Y (left end part in FIG. 6), a plurality of positive electrode tabs 22t are provided. The plurality of positive electrode tabs 22t protrude toward one side in the long side direction Y (left side in FIG. 6). The plurality of positive electrode tabs 22t protrude in the long side direction Y relative to the separator 26. The positive electrode tabs 22t are provided with a space (intermittently) along a longitudinal direction of the positive electrode 22. By providing the plurality of positive electrode tabs 22t, the resistance of the battery 100 can be reduced. The positive electrode tab 22t constitutes a part of the positive electrode current collector 22c here, and is made of a metal foil (aluminum foil). It is preferable that the positive electrode tab 22t be a current collector exposing part in which the positive electrode active material layer 22a and the positive electrode protection layer 22p are not formed at least partially and the positive electrode current collector 22c is exposed.

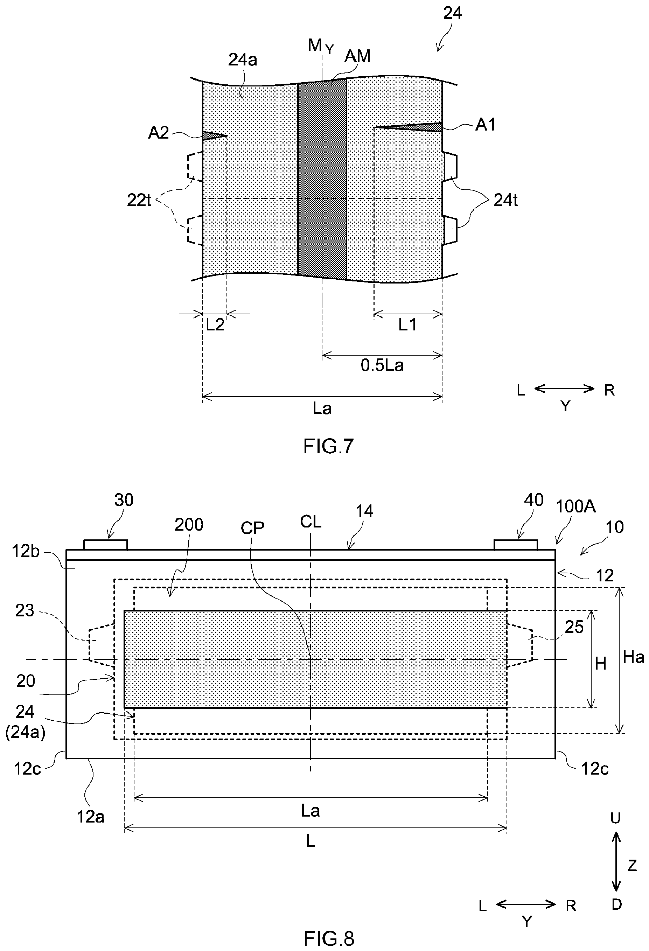

As illustrated in FIG. 3, the plurality of positive electrode tabs 22t are stacked at one end part in the long side direction Y (left end part in FIG. 3), and form the positive electrode tab group 23. The plurality of positive electrode tabs 22t are stacked, and bent and curved such that outer ends thereof are aligned. Thus, the accommodating property into the battery case 10 can be improved and the battery 100 can be reduced in size. In addition, the volume energy density of the battery 100 can be improved. The present inventor's examination indicates that if the positive electrode tab 22t is bent and curved, for example, the interelectrode distance between the positive electrode 22 and the negative electrode 24 tends to become large locally near the positive electrode tab group 23 (particularly, near root), which will be described in detail below. As a result, a second high-resistance region A2 (see FIG. 7), which will be described below, is formed easily in the negative electrode active material layer 24a. Thus, it is particularly effective to apply the art disclosed herein. A positive electrode second current collecting part 52 of the positive electrode current collecting part 50 to be described below is attached (in detail, joined) to the positive electrode tab group 23. The plurality of positive electrode tabs 22t are connected to the positive electrode second current collecting part 52 in a state of being stacked and bent. The positive electrode tab group 23 is electrically connected to the positive electrode terminal 30 through the positive electrode current collecting part 50.

As illustrated in FIG. 6, the positive electrode active material layer 22a is provided to have a band shape along a longitudinal direction of the positive electrode current collector 22c with a band shape. The positive electrode active material layer 22a contains a positive electrode active material (for example, a lithium transition metal complex oxide) capable of reversibly storing and releasing the charge carriers. Examples of the lithium transition metal complex oxide include a lithium manganese containing complex oxide, which contains at least a lithium element and a manganese element. Examples of the lithium manganese containing complex oxide include a lithium manganese complex oxide (for example, LiMn₂O₄ and Li₂MnO₃), a lithium manganese nickel complex oxide in which a part of manganese is replaced by nickel (LiNiₓMn₂₋ₓO₄ (in which 0 < x < 2 and preferably 0 < x < 1)), a lithium nickel cobalt manganese complex oxide containing cobalt additionally, and the like. According to the present inventor's examination, in the case where the positive electrode 22 (in detail, positive electrode active material) contains the lithium manganese containing complex oxide, elution of Mn in the nonaqueous electrolyte solution makes it easier to generate a first high-resistance region A1 and/or the second high-resistance region A2 (see FIG. 7) to be described below in the negative electrode active material layer 24a, which will be described in detail below. Thus, it is particularly effective to apply the art disclosed herein.

In a preferred aspect, for example, the positive electrode active material is doped with an additive element such as W or Zr. Alternatively, a compound containing the additive element such as W or Zr (for example, oxide such as zirconia (ZrO₂)) adheres to a surface of the positive electrode active material. Although not limited in particular, the ratio of the additive element in the positive electrode active material (for example, lithium manganese containing complex oxide) is preferably 0.1 to 2.0 mass%, more preferably 0.2 to 1.5 mass%, and still more preferably 0.3 to 1.0 mass%. According to the present inventor's examination, in the case where the positive electrode active material contains a zirconium (Zr) element, elution of Zr in the nonaqueous electrolyte solution makes it easier to generate the first high-resistance region A1 and/or the second high-resistance region A2 (see FIG. 7) to be described below in the negative electrode active material layer 24a, which will be described in detail below. Thus, it is particularly effective to apply the art disclosed herein.

When a total solid content of the positive electrode active material layer 22a is set to 100 mass%, the positive electrode active material (for example, lithium manganese containing complex oxide) may occupy approximately 80 mass% or more, typically 90 mass% or more, and for example 95 mass% or more. The positive electrode active material layer 22a may contain any component other than the positive electrode active material, for example, a conductive material, a binder, various additive components, or the like. As the conductive material, for example, a carbon material such as acetylene black (AB) can be used. As the binder, for example, polyvinylidene fluoride (PVdF) or the like can be used.

Although not limited in particular, in the battery 100 of a high-capacity type, which is used for vehicles or the like, as illustrated in FIG. 6, the width of the positive electrode active material layer 22a in the winding axis WL direction (average value, excluding a part formed in the positive electrode tab 22t), in other words, a length Lc in the long side direction Y is preferably 150 mm or more, more preferably 200 mm or more, and still more preferably 250 mm or more.

The positive electrode protection layer 22p is provided between the positive electrode current collector 22c and the positive electrode active material layer 22a in the long side direction Y as illustrated in FIG. 6. Here, the positive electrode protection layer 22p is provided at one end part (left end part in FIG. 6) of the positive electrode current collector 22c in the long side direction Y The positive electrode protection layer 22p is formed to have a band shape along the positive electrode active material layer 22a. The positive electrode protection layer 22p contains inorganic filler (for example, alumina). The positive electrode protection layer 22p may contain an optional component other than the inorganic filler, such as a conductive material, a binder, or various additive components. The conductive material and the binder may be the same as those described as the examples that may be contained in the positive electrode active material layer 22a.

As illustrated in FIG. 6, the negative electrode 24 includes a negative electrode current collector 24c and a negative electrode active material layer 24a that is fixed on at least one surface of the negative electrode current collector 24c. The negative electrode current collector 24c has a band shape. The negative electrode current collector 24c is formed of, for example, a conductive metal such as copper, a copper alloy, nickel, or stainless steel. The negative electrode current collector 24c preferably includes copper or a copper alloy. Here, the negative electrode current collector 24c is a metal foil, specifically a copper foil. The negative electrode current collector 24c is preferably formed of a copper foil or a copper alloy foil. According to the present inventor's examination, in the case where the negative electrode 24 (in detail, negative electrode current collector 24c) contains Cu, elution of Cu in the nonaqueous electrolyte solution makes it easier to generate the first high-resistance region A1 and/or the second high-resistance region A2 (see FIG. 7) to be described below in the negative electrode active material layer 24a, which will be described in detail below. Thus, it is particularly effective to apply the art disclosed herein.

At one end part of the negative electrode current collector 24c in the long side direction Y (right end part in FIG. 6), a plurality of negative electrode tabs 24t are provided. Each of the plurality of negative electrode tabs 24t protrudes toward one side in the long side direction Y (right side in FIG. 6). The plurality of negative electrode tabs 24t protrude in the long side direction Y relative to the separator 26. The plurality of negative electrode tabs 24t are provided with a space (intermittently) along a longitudinal direction of the negative electrode 24. By providing the plurality of negative electrode tabs 24t, the resistance of the battery 100 can be reduced. The negative electrode tab 24t in the present embodiment includes Cu. The negative electrode tab 24t here constitutes a part of the negative electrode current collector 24c and is made of a metal foil (copper foil). The negative electrode tab 24t preferably constitutes a part of the negative electrode current collector 24c. It is preferable that the negative electrode tab 24t be a current collector exposing part in which the negative electrode active material layer 24a is not formed at least partially and the negative electrode current collector 24c is exposed.

As illustrated in FIG. 3, the plurality of negative electrode tabs 24t are stacked at one end part in the long side direction Y (right end part in FIG. 3) and form the negative electrode tab group 25. The plurality of negative electrode tabs 24t are stacked, and bent and curved such that outer ends thereof are aligned. Thus, the accommodating property into the battery case 10 can be improved and the battery 100 can be reduced in size. In addition, the volume energy density of the battery 100 can be improved. The present inventor's examination indicates that if the negative electrode tab 24t is bent and curved, for example, the interelectrode distance between the positive electrode 22 and the negative electrode 24 tends to become large locally near the negative electrode tab group 25 (particularly, near root), which will be described in detail below. As a result, the first high-resistance region A1 (see FIG. 7), which will be described below, is formed easily in the negative electrode active material layer 24a. Thus, it is particularly effective to apply the art disclosed herein. A negative electrode second current collecting part 62 of the negative electrode current collecting part 60 to be described below is attached to the negative electrode tab group 25. The plurality of negative electrode tabs 24t are connected to the negative electrode second current collecting part 62 in a state of being stacked and bent. The negative electrode tab group 25 is electrically connected to the negative electrode terminal 40 through the negative electrode current collecting part 60.

As illustrated in FIG. 6, the negative electrode active material layer 24a is provided to have a band shape along the longitudinal direction of the negative electrode current collector 24c with a band shape. The negative electrode active material layer 24a contains a negative electrode active material (for example, a carbon material such as graphite, and a silicon material) capable of reversibly storing and releasing the charge carriers. When a total solid content of the negative electrode active material layer 24a is set to 100 mass%, the negative electrode active material may occupy approximately 80 mass% or more, typically 90 mass% or more, and for example 95 mass% or more. The negative electrode active material layer 24a may contain any component other than the negative electrode active material, for example, a binder, various additive components, or the like. As the binder, for example, rubbers such as styrene-butadiene rubber (SBR) or celluloses such as carboxymethyl cellulose (CMC) can be used.

As illustrated in FIG. 6, the width of the negative electrode active material layer 24a in the winding axis WL direction (average value, excluding a part formed in the negative electrode tab 24t), in other words, a length La in the long side direction Y is typically more than or equal to the length Lc of the positive electrode active material layer 22a in the long side direction Y Although not limited in particular, the length La is preferably 150 mm or more, more preferably 200 mm or more, and still more preferably 250 mm or more from the viewpoints of increasing the capacity and the like. As illustrated in FIG. 3, in the wound electrode body 20a, the nonaqueous electrolyte solution is supplied from only both end parts in the long side direction Y (winding axis WL direction). Thus, as the length La is longer, the nonaqueous electrolyte solution permeates less easily into a central part including a center M_{Y} (see FIG. 7) in the long side direction Y As a result, in the central part in the long side direction Y, the film is formed less easily and the central part tends to have high resistance. Thus, it is particularly effective to apply the art disclosed herein. The length La may be, for example, 1000 mm or less and 500 mm or less. Thus, the effect of the art disclosed herein can be achieved at a high level.

As illustrated in FIG. 5, a height Ha of the negative electrode active material layer 24a existing in the flat part 20f of the wound electrode body 20a (the height Ha is the same as the height of the flat part 20f) is preferably 110 mm or less, more preferably 50 to 110 mm, still more preferably 70 to 100 mm, and particularly preferably 70 to 90 mm. In the flat part 20f, a ratio (horizontal/vertical ratio) of the length La of the negative electrode active material layer 24a in the long side direction Y to the height Ha of the negative electrode active material layer 24a is preferably 1 to 10, more preferably 2 to 7, and still more preferably 3 to 5.

FIG. 7 is a schematic plan view of the negative electrode 24 for about 1.5 turns that is unfastened. Note that reference sign M_{Y} indicates a central position that is 0.5La from each of end parts on both sides in the long side direction Y (winding axis WL direction). As illustrated in FIG. 7, in the present embodiment, the negative electrode active material layer 24a includes the first high-resistance region A1 with a stripe shape extending toward the central part from one end part in the long side direction Y where the negative electrode tabs 24t are provided (right end part in FIG. 7, specifically a first end side), and a central part high-resistance region AM extending in a band shape in the central part in the long side direction Y Note that the number of first high-resistance regions A1 is one here. However, the number of first high-resistance regions A1 included in one negative electrode 24 with a band shape may be two or more (plural). For example, one first high-resistance region A1 may be formed or two or more (plural) first high-resistance regions A1 may be formed in each turn.

The first high-resistance region A1 is a region whose resistance value is 1.5 times or more higher than that in a periphery. Note that the resistance value can be measured by a conventionally known method in accordance with an AC impedance method. For example, the resistance value can be measured by a resistance inspection device disclosed in Japanese Patent Application Publication No. 2014-25850, which will be described in detail in Examples below.

It is not intended to limit the interpretation in particular; however, it is presumed that the first high-resistance region A1 is generated by a mechanism different from that of the central part high-resistance region AM according to the present inventor's examination. That is to say, the central part high-resistance region AM is a region where the resistance is considered to be higher due to the small quantity of the film. In detail, in the battery 100, a part of the nonaqueous electrolyte solution is decomposed at initial charging and a film including a decomposition product thereof (SEI film) is formed on a surface of the negative electrode active material layer 24a. By this film, an interface between the negative electrode active material layer 24a and the nonaqueous electrolyte solution is stabilized. However, in the wound electrode body 20a with higher capacity in particular, the nonaqueous electrolyte solution permeates less easily into the central part in the long side direction Y; thus, the film is formed less easily in the central part in the long side direction Y at the initial charging. It is considered that the central part high-resistance region AM is formed accordingly.

On the other hand, the first high-resistance region A1 is a region considered to have high resistance because the plurality of negative electrode tabs 24t are bent and curved. Specifically, when the wound electrode body 20a is impregnated with the nonaqueous electrolyte solution, a metal ion may be eluted into the nonaqueous electrolyte solution from the wound electrode body 20a due to, for example, the influence from moisture or oxygen in the electrolyte solution. For example, from the negative electrode 24, Cu that is included in the negative electrode current collector 24c (or negative electrode tabs 24t) may be eluted. From the positive electrode 22, the transition metal element (particularly, Mn) that is the constituent element of the positive electrode active material or the additive element (for example, Zr) may be eluted. In this case, if the negative electrode tab 24t is bent and curved (in other words, if an external force is applied), the interelectrode distance between the positive electrode 22 and the negative electrode 24 tends to become large locally at this position. Then, a large quantity of nonaqueous electrolyte solution including the metal ion tends to gather at the position where the interelectrode distance becomes large locally. If the initial charging occurs in this state, the potential of the negative electrode 24 decreases and the metal such as Mn, Zr, or Cu eluted into the nonaqueous electrolyte solution is precipitated on the negative electrode active material layer 24a. Here, if the excessive nonaqueous electrolyte solution (excessive solution) exists outside the wound electrode body 20a, the eluted metal ion also remains in the excessive solution and thus, the metal precipitation quantity increases in the place closer to the end part of the wound electrode body 20a in the long side direction Y As a result, it is considered that at the place where the metal is precipitated, decomposition of the nonaqueous solvent is promoted and the quantity of an organic film becomes larger than that in the periphery and thus, the first high-resistance region A1 is formed.

The central part high-resistance region AM can be suppressed into a region within ±15% from the center M_{Y} in the long side direction Y (winding axis WL direction) by, for example, devising the conditions in a compressed impregnation step (step 2) in the manufacturing method to be described below. However, it is very difficult to eliminate the central part high-resistance region AM completely. Therefore, if the first high-resistance region A1 extends long in the long side direction Y and overlaps with the central part high-resistance region AM, a region with very high resistance (ultrahigh-resistance region) may be formed.

In view of this, in the present embodiment, when the negative electrode active material layer 24a has a length (total length) of La and the first high-resistance region A1 has a length of L1 in the long side direction Y (winding axis WL direction, direction perpendicular to the first end side) as illustrated in FIG. 7, a ratio (L1/La) of the length L1 of the first high-resistance region A1 to the length La of the negative electrode active material layer 24a is 0.35 or less. This makes it difficult for the first high-resistance region A1 to overlap with the central part high-resistance region AM, and thus, the formation of the ultrahigh-resistance region can be suppressed. Furthermore, the drastic decrease in battery characteristic can be suppressed.

The ratio (L1/La) is preferably 0.31 or less, more preferably 0.3 or less, and still more preferably 0.2 or less from the viewpoint of achieving the effect of the art disclosed herein at the high level. The ratio (L1/La) is typically more than 0, and may be 0.05 or more, for example. In a case where there are two or more (plural) first high-resistance regions A1, the effect of the art disclosed herein can be achieved as long as at least one first high-resistance region A1 satisfies the aforementioned ratio (L1/La); however, preferably a half or more of, and still more preferably all of the first high-resistance regions A1 satisfy the aforementioned ratio (L1/La). In the case where the length La of the negative electrode active material layer 24a in the long side direction Y is long as described in this embodiment, the aforementioned ratio (L1/La) may be 0.1 or more and 0.2 or more.

In this embodiment, the negative electrode active material layer 24a further includes the second high-resistance region A2 with a stripe shape extending toward the central part from the other end part in the long side direction Y where the positive electrode tabs 22t are provided (left end part in FIG. 7, specifically a second end side). However, in a case where the positive electrode tab group 23 and the negative electrode tab group 25 are provided at the end part on the same side in the long side direction Y, for example, the second high-resistance region A2 is not always formed on the other end part in the long side direction Y The second high-resistance region A2 is formed one by one here. However, one negative electrode 24 with a band shape may include two or more (plural) second high-resistance regions A2. For example, one, or two or more (plural) second high-resistance regions A2 may be formed in each turn.

The second high-resistance region A2 is a region whose resistance value is 1.5 times or more higher than that in a periphery, similarly to the first high-resistance region A1 formed at the end part on the opposite side in the long side direction Y The second high-resistance region A2 is a region considered to have the higher resistance because the plurality of positive electrode tabs 22t are bent and curved, similarly to the first high-resistance region A1. When the negative electrode active material layer 24a has a length of La and the second high-resistance region A2 has a length of L2 in the long side direction Y (winding axis WL direction) as illustrated in FIG. 7, a ratio (L2/La) of the length L2 of the second high-resistance region A2 to the length La of the negative electrode active material layer 24a is preferably 0.35 or less. This also makes it difficult for the second high-resistance region A2 to overlap with the central part high-resistance region AM, and thus, the formation of the region with the very high resistance can be suppressed at the high level. Furthermore, the drastic decrease in battery characteristic can be suppressed at the high level.

The ratio (L2/La) is preferably 0.31 or less, more preferably 0.3 or less, and still more preferably 0.2 or less from the viewpoint of achieving the effect of the art disclosed herein at the high level. The ratio (L2/La) is typically more than 0, and may be 0.05 or more, for example. In a case where there are two or more (plural) second high-resistance regions A2, at least one second high-resistance region A2 preferably satisfies the aforementioned ratio (L2/La) and more preferably a half or more of, and still more preferably all of the second high-resistance regions A2 satisfy the aforementioned ratio (L2/La). In the case where the length La of the negative electrode active material layer 24a in the long side direction Y is long as described in this embodiment, the aforementioned ratio (L2/La) may be 0.1 or more and 0.2 or more.

Note that a measurement method for the length L1 and the length L2 is described in detail in Examples below, and the high-resistance region can be distinguished with eyes as "color unevenness". The ratio (L1/La) can be adjusted by the length La and/or the length L1, and the ratio (L2/La) can be adjusted by the length La and/or the length L2. The values of the lengths L1 and L2 can be suitably adjusted by, for example, the conditions in an initial charging step (step 3) in the manufacturing method to be descried below, particularly the restriction position or the restriction load of the battery case 10 in the initial charging step.

From the viewpoint of improving the battery characteristic, it is preferable to reduce the resistance of the central part high-resistance region AM as much as possible. Regarding the resistance value of the central part high-resistance region AM, when the resistance distribution is measured along the long side direction Y (winding axis WL direction) in a part of the negative electrode active material layer 24a where the first high-resistance region A1 is not formed, a resistance value Rm at a central position that is 0.5La from one end part (right end part in FIG. 7) (the central position corresponds to a position that is estimated to have the highest resistance in the central part high-resistance region AM) is preferably 1.5 times or less a resistance value Rs at a reference position that is 0.25La from the one end part (the reference position corresponds to a position where neither the first high-resistance region A1 nor the central part high-resistance region AM is formed). Thus, unevenness in the film of the negative electrode active material layer 24a in the long side direction Y can be reduced. In addition, the spread of the central part high-resistance region AM in the long side direction Y can be suppressed and the formation of the ultrahigh-resistance region can be suppressed at the higher level. In the case where the length La of the negative electrode active material layer 24a in the long side direction Y is long as described in the present embodiment, the resistance value Rm can be 1.3 times or more and 1.4 times or more the resistance value Rs. Note that the resistance ratio can be adjusted suitably by the conditions in the compressed impregnation step (step 2) in the manufacturing method to be described below, for example.

As illustrated in FIG. 6, the separator 26 is a member that insulates the positive electrode active material layer 22a of the positive electrode 22 and the negative electrode active material layer 24a of the negative electrode 24 from each other. The width of the separator 26 in the winding axis WL direction, that is, a length Ls in the long side direction Y is more than or equal to the length La of the negative electrode active material layer 24a in the long side direction Y, typically. The separator 26 is preferably, for example, a porous sheet made of resin including polyolefin resin such as polyethylene (PE) or polypropylene (PP). The separator 26 may include an adhesive layer or a heat resistance layer (HRL) on a surface of a base material part formed by a porous sheet made of resin. The adhesive layer is a layer including a binder. For example, the heat resistance layer is a layer including inorganic filler such as alumina, silica, boehmite, magnesia, or titania and a binder such as PVdF. The heat resistance layer can also serve as the adhesive layer. The structures of the heat resistance layer and the adhesive layer may be similar to the conventional structures thereof.

The separator 26 preferably includes the adhesive layer on a surface on a side facing the negative electrode 24. The adhesive layer has a function of attaching (crimping) the negative electrode 24 and the separator 26 to each other by melting when, for example, the wound electrode body 20a is press-molded. The negative electrode 24 and the separator 26 are preferably attached to each other by the adhesive layer. Thus, even in the case where the positive electrode tab 22t or the negative electrode tab 24t is bent and curved, the local increase in interelectrode distance can be suppressed. Additionally, when the negative electrode 24 and the separator 26 are strongly attached to each other, the nonaqueous electrolyte solution does not easily permeate to the central part in the long side direction Y and the film is not easily formed. As a result, the central part in the long side direction Y tends to have high resistance. Thus, it is particularly effective to apply the art disclosed herein. Note that although the adhesive layer is provided on the surface of the separator 26 that faces the negative electrode 24 here, the adhesive layer may be provided on a surface of the negative electrode 24 that faces the separator 26 or the adhesive layer may be provided on a surface of the separator 26 that faces the positive electrode 22 in another embodiment.

As illustrated in FIG. 2, the positive electrode current collecting part 50 forms a conductive path for electrically connecting the positive electrode terminal 30 and the positive electrode tab group 23 formed by the plurality of positive electrode tabs 22t. The positive electrode current collecting part 50 may be formed of the same metal species as the positive electrode current collector 22c, for example, a conductive metal such as aluminum, an aluminum alloy, nickel, or stainless steel. The positive electrode current collecting part 50 includes a positive electrode first current collecting part 51 that is connected to the positive electrode terminal 30 and the positive electrode second current collecting part 52 that is connected to the positive electrode tab group 23. The positive electrode first current collecting part 51 is attached to an inner surface of the sealing plate 14.

The positive electrode second current collecting part 52 extends along the short side wall 12c of the exterior body 12. The positive electrode second current collecting part 52 is attached to the positive electrode tab group 23 of the wound electrode body 20a. As illustrated in FIG. 3, a joining part J with the positive electrode tab group 23 is formed in the positive electrode second current collecting part 52. The joining part J is a welding joining part formed by welding, such as ultrasonic welding, resistance welding, or laser welding, with the plurality of positive electrode tabs 22t stacked on each other, for example. The joining part J is disposed with the plurality of positive electrode tabs 22t placed on one side of the wound electrode bodies 20a, 20b, and 20c in the short side direction X (front side in FIG. 3). Thus, the plurality of positive electrode tabs 22t can be bent suitably in the stacked state and the positive electrode tab group 23 with the curved shape can be formed stably.

As illustrated in FIG. 2, the negative electrode current collecting part 60 forms a conductive path for electrically connecting the negative electrode terminal 40 and the negative electrode tab group 25 formed by the plurality of negative electrode tabs 24t. The negative electrode current collecting part 60 may be formed of the same metal species as the negative electrode current collector 24c, for example, a conductive metal such as copper, a copper alloy, nickel, or stainless steel. The negative electrode current collecting part 60 includes a negative electrode first current collecting part 61 that is connected to the negative electrode terminal 40 and the negative electrode second current collecting part 62 that is connected to the negative electrode tab group 25. The structure and arrangement of the negative electrode first current collecting part 61 and the negative electrode second current collecting part 62 may be similar to those of the positive electrode first current collecting part 51 and the positive electrode second current collecting part 52 of the positive electrode current collecting part 50, respectively.

The negative electrode second current collecting part 62 is attached to the negative electrode tab group 25 of the wound electrode body 20a. As illustrated in FIG. 3, the joining part J with the negative electrode tab group 25 is formed in the negative electrode second current collecting part 62. The joining part J is a welding joining part formed by welding, such as ultrasonic welding, resistance welding, or laser welding, with the plurality of negative electrode tabs 24t stacked on each other, for example, similarly to that on the positive electrode side. The joining part J is disposed with the plurality of negative electrode tabs 24t placed on one side of the wound electrode bodies 20a, 20b, and 20c in the short side direction X (front side in FIG. 3). Thus, the plurality of negative electrode tabs 24t can be bent suitably in the stacked state and the negative electrode tab group 25 with the curved shape can be formed stably.

As illustrated in FIG. 2, the positive electrode insulating member 70 is a member that insulates the sealing plate 14 and the positive electrode first current collecting part 51. The positive electrode insulating member 70 is made of a resin material that has resistance against the electrolyte solution to be used and an electrical insulating property and that is capable of elastic deformation. For example, the positive electrode insulating member 70 is preferably made of a polyolefin resin such as polypropylene (PP), a fluorinated resin such as tetrafluoroethylene-perfluoroalkoxy ethylene copolymer (PFA), polyphenylene sulfide (PPS), or the like.

As illustrated in FIG. 2, the negative electrode insulating member 80 is a member that insulates the sealing plate 14 and the negative electrode first current collecting part 61. The negative electrode insulating member 80 is disposed to be symmetrical to the positive electrode insulating member 70 about a center CL of the wound electrode body 20a in the long side direction Y The material, the structure, and the like of the negative electrode insulating member 80 may be similar to those of the positive electrode insulating member 70.

The nonaqueous electrolyte solution typically contains a nonaqueous solvent and a supporting salt (electrolyte salt). As the nonaqueous solvent, one kind or two or more kinds of nonaqueous solvents that have conventionally been known as being usable for the nonaqueous electrolyte solution secondary battery can be used. Examples of the nonaqueous solvent include organic solvents such as carbonates, ethers, esters, nitriles, sulfones, and lactones. The nonaqueous solvent preferably includes the carbonates. Examples of the carbonates include chain carbonates such as ethylene carbonate (EC), dimethyl carbonate (DMC), diethyl carbonate (DEC), and ethyl methyl carbonate (EMC) and cyclic carbonates such as propylene carbonate (PC).

The supporting salt is not limited to a particular type as long as the charge carriers (typically, lithium ion) are included, and one kind or two or more kinds of electrolyte salts that have conventionally been known as being usable for the nonaqueous electrolyte solution secondary battery can be used. One example of the supporting salt is fluorine-containing lithium salt such as LiPF₆ or LiBF₄. The supporting salt preferably contains LiPF₆.

The nonaqueous electrolyte solution may further contain an additional component (additive). As the additive, one kind or two or more kinds of additives that have conventionally been known as being able to be added to the nonaqueous electrolyte solution can be used. Examples of the additive include: a boron-based additive containing a boron element, such as lithium bisoxalate borate (LiBOB) or lithium difluoro(oxalato)borate (LiODFB); a phosphorus-based additive containing a phosphorus element, such as lithium difluorophosphate (LiPO₂F₂) or lithium difluorooxalate phosphate (LiDFOP); a sulfur-based additive containing a sulfur element, such as lithium fluorosulfonate (LiSO₃F), lithium=ethyl=sulfate, lithium bis(trifluoromethanesulfonyl)imide (LiTFSI), or lithium bis(fluorosulfonyl)imide (LiFSI); and the like. These additives may be so-called film formation agents that are decomposed before (at lower potential than) the nonaqueous solvent and/or the supporting salt at the initial charging and form the film on the surface of the negative electrode active material layer 24a.

In a preferred aspect, the nonaqueous electrolyte solution includes a lithium salt containing the phosphorus element (P) (P-containing lithium salt). Examples of the P-containing lithium salt include LiPF₆ given above as the example of the supporting salt, LiPO₂F₂ and LiDFOP given above as the example of the additive, and the like. The present inventor's examination indicates that, when the nonaqueous electrolyte solution includes the P-containing lithium salt, the first high-resistance region A1 and/or the second high-resistance region A2 may be formed easily in the negative electrode active material layer 24a. Thus, it is particularly effective to apply the art disclosed herein.

In a preferred aspect, the nonaqueous electrolyte solution includes a lithium salt containing the boron element (B) (B-containing lithium salt). Examples of the B-containing lithium salt include LiBF₄ given above as the example of the supporting salt, LiBOB and LiODFB given above as the example of the additive, and the like. The present inventor's examination indicates that, when the nonaqueous electrolyte solution includes the B-containing lithium salt, the first high-resistance region A1 and/or the second high-resistance region A2 may be formed easily in the negative electrode active material layer 24a. Thus, it is particularly effective to apply the art disclosed herein.

In a preferred aspect, the nonaqueous electrolyte solution includes a lithium salt containing the sulfur element (S) (S-containing lithium salt). Examples of the S-containing lithium salt include LiSO₃F, lithium=ethyl=sulfate, LiTFSI, and LiFSI given above as the example of the additive, and the like. The present inventor's examination indicates that, when the nonaqueous electrolyte solution includes the S-containing lithium salt, the first high-resistance region A1 and/or the second high-resistance region A2 may be formed easily in the negative electrode active material layer 24a. Thus, it is particularly effective to apply the art disclosed herein.

The additive in the nonaqueous electrolyte solution (for example, the boron-based additive, the phosphorus-based additive, or the sulfur-based additive described above) is typically decomposed electrically by the initial charging at the battery manufacture or the like and consumed to form the film on the negative electrode active material layer 24a or the like. Therefore, in the state of the battery 100, the additive as described above may be included (remain) or may not be included in the nonaqueous electrolyte solution.

### <Manufacturing method for battery 100>

For example, the battery 100 can be manufactured by a manufacturing method including the following steps in the following order: a constructing step for a battery assembly (step 1), the compressed impregnation step (step 2), the initial charging step (step 3), a defoaming step (step 4), and a liquid injection hole sealing step (step 5). However, the compressed impregnation step (step 2) and the defoaming step (step 4) are optional and can be omitted in another embodiment. Additionally, another step may be included at an optional stage.

In the constructing step (step 1), the electrode body group 20 (the wound electrode bodies 20a, 20b, and 20c) and the nonaqueous electrolyte solution are accommodated in the battery case 10 to construct a battery assembly 100A (see FIG. 8) in a glove box. In this specification, the term "battery assembly" refers to an intermediate object assembled up to the state before the initial charging step (step 3) is performed in the manufacturing process for the battery 100. The order of accommodating the electrode body group 20 and the nonaqueous electrolyte solution in the battery case 10 is not limited in particular. For example, after the electrode body group 20 is accommodated in the battery case 10, the nonaqueous electrolyte solution may be injected into the battery case 10.

In a preferred embodiment, the present step includes an electrode body group disposing step (step 1-1), a welding joining step (step 1-2), a drying step (step 1-3), and a liquid injecting step (step 1-4) typically in this order. However, the drying step (step 1-3) is optional and can be omitted in another embodiment. In still another embodiment, the order of the welding joining step (step 1-2) and the drying step (step 1-3) may be opposite and the order of the welding joining step (step 1-2) and the liquid injecting step (step 1-4) may be opposite. Additionally, another step may be included at an optional stage.

In the electrode body group disposing step (step 1-1), the electrode body group 20 is disposed inside the exterior body 12. Specifically, the electrode body group 20 is accommodated inside the exterior body 12 through the opening 12h. Next, in the welding joining step (step 1-2), the sealing plate 14 is welded at the periphery of the opening 12h of the exterior body 12 to integrate the exterior body 12 and the sealing plate 14. Then, in the drying step (step 1-3), the exterior body 12 accommodating the electrode body group 20 is dried with the liquid injection hole 15 opened, so that the moisture inside the exterior body 12 is removed. In particular, the moisture inside the electrode body group 20 is removed. The moisture is removed similarly to the conventional art using a heating and drying device, a vacuum drying device, or the like through operations of heating, decompression, and the like carried out alone or in combination. The heating temperature is preferably set so that the moisture can be evaporated suitably in a decompressed state and the separator 26 of the electrode body group 20 and the like do not thermally deteriorate, for example. The heating temperature can be set in the range of, for example, 50 to 200°C.

Next, in the liquid injecting step (step 1-4), first, the nonaqueous electrolyte solution is prepared. The nonaqueous electrolyte solution typically includes the nonaqueous solvent and the supporting salt essentially, and may include one kind or two or more kinds of additives as described above. Although not limited in particular, the concentration of the additive in the nonaqueous electrolyte solution is preferably 0.01 mol/L or more and more preferably 0.05 mol/L or more per kind because the suitable film is easily formed on the surface of the negative electrode active material layer 24a. On the other hand, from the view point of suppressing the increase in battery resistance, the concentration of the additive in the nonaqueous electrolyte solution is preferably 1 mol/L or less, more preferably 0.5 mol/L or less, and still more preferably 0.1 mol/L or less per kind (or in total). The nonaqueous electrolyte solution is injected into the battery case 10 through the liquid injection hole 15 of the sealing plate 14. The liquid is injected preferably with the inside of the battery case 10 decompressed in order to improve the impregnation of the electrode body group 20 (the wound electrode bodies 20a, 20b, and 20c) with the nonaqueous electrolyte solution.

In the compressed impregnation step (step 2), after the constructing step for the battery assembly 100A (see FIG. 8) (specifically, the liquid injecting step), the battery assembly 100A is accommodated in a chamber in which the pressure can be regulated, and in a state where the liquid injection hole 15 is opened (in other words, a state where there is no pressure difference between the inside and the outside of the battery case 10), the compression and pressure release are repeated a predetermined number of times. Thus, the inside of each of the wound electrode bodies 20a, 20b, and 20c, particularly the central part in the long side direction can be impregnated with the nonaqueous electrolyte solution for sure. As a result, the resistance of the central part high-resistance region AM can be reduced and the unevenness of the film in the long side direction Y can be reduced.

The pressure at the compression is preferably 0.5 MPa or more, and more preferably 0.8 MPa or more, for example, although depending on the length La of the negative electrode active material layer 24a in the long side direction Y or the like. The holding time in the compressed state is preferably five minutes or more, and more preferably six minutes or more, for example, although depending on the length La of the negative electrode active material layer 24a in the long side direction Y or the like. After the compression, the pressure is released to return to normal pressure (about 0 MPa); in this case, the holding time in the normal pressure state is preferably one minute or more. The number of times of repeating the compression and the pressure release is preferably 10 times or more, more preferably 15 times or more, and still more preferably 20 times or more. This step may be performed in a normal temperature (for example, about 25°C ± 10°C, 25°C ± 5°C) environment.

In the initial charging step (step 3), the battery assembly 100A (see FIG. 8) is charged at least once after the compressed impregnation step. The nonaqueous electrolyte solution (for example, additive) is electrically decomposed at the initial charging and the film including the decomposition product (SEI film) is formed on the surface of the negative electrode active material layer 24a. The initial charging is preferably performed in a state where a predetermined region of the battery case 10 is pressed. Specifically, the initial charging is performed preferably while a part where the positive electrode active material layer 22a and the negative electrode active material layer 24a of the flat part 20f face each other is pressed. In particular, it is preferable that the initial charging be performed while a part where the first high-resistance region A1 and/or the second high-resistance region A2 is formed easily (in other words, a place where the interelectrode distance increases locally so that the nonaqueous electrolyte solution tends to remain) is pressed. It is particularly effective to press a vicinity of the positive electrode tab group 23 (especially near root) and a vicinity of the negative electrode tab group 25 (especially near root). Thus, the local increase in interelectrode distance can be suppressed and the length L1 of the first high-resistance region A1 and/or the length L2 of the second high-resistance region A2 can be adjusted suitably to a predetermined value or less (for example, 0.35 or less).

In a preferred embodiment, first, a cell pressing machine including a pair of restriction plates is prepared. Moreover, a pressing member 200 for pressing a predetermined region of the battery case 10 is prepared. FIG. 8 is a side view schematically illustrating a positional relation between the battery assembly 100A (specifically, the long side wall 12b of the battery case 10) and the pressing member 200 in the present step. The pressing member 200 has a rectangular shape in a side view. The pressing member 200 has a cuboid shape. Note that in FIG. 8, the wound electrode body 20a inside the battery case 10 is expressed by a hidden line (dotted line).

As illustrated in FIG. 8, the pressing member 200 is preferably smaller than the long side wall 12b of the battery case 10, and also preferably smaller than the wound electrode body 20a inside the battery case 10. It is preferable that the pressing member 200 do not press largely the positive electrode tab group 23 and the negative electrode tab group 25 in the long side direction Y and have the length that can press the range from the vicinity of the root of the positive electrode tab group 23 to the vicinity of the root of the negative electrode tab group 25. It is preferable that a length L of the pressing member 200 be more than or equal to the length of the part where the positive electrode active material layer 22a and the negative electrode active material layer 24a face each other (here, the length Lc of the positive electrode active material layer 22a) in the long side direction Y Thus, the local increase in interelectrode distance can be suppressed at the high level. In the present embodiment, the length L of the pressing member 200 is more than the length La of the negative electrode active material layer 24a. The pressing member 200 has the length that can press substantially the entire negative electrode active material layer 24a in the long side direction Y here. The length L of the pressing member 200 is preferably 150 mm or more, more preferably 200 mm or more, and still more preferably 250 mm or more.

In this embodiment, a height H of the pressing member 200 is smaller than the total height of the wound electrode body 20a and additionally smaller than a height Ha of the negative electrode active material layer 24a (a height of the flat part 20f) in the height direction Z. Thus, the initial charging can be performed in a state where the flow channel of the nonaqueous electrolyte solution is secured and the electrode body group 20 (wound electrode bodies 20a, 20b, and 20c) is impregnated sufficiently with the nonaqueous electrolyte solution. The height H of the pressing member 200 is preferably 100 mm or less, more preferably 50 to 100 mm, still more preferably 60 to 90 mm, and particularly preferably 70 to 80 mm.

In the present step, next, the pair of long side walls 12b of the battery assembly 100A is held between two pressing members 200 from the short side direction X. Specifically, the battery assembly 100A and the pressing member 200 are disposed to face each other so that a central position CP of the long side wall 12b of the battery case 10 coincides with a center of the pressing member 200. In this state, the battery assembly 100Ais disposed between the pair of restriction plates of the pressing machine and charging is performed with a predetermined restriction load applied to the battery assembly 100A. From the viewpoint of achieving the effect of the art disclosed herein at the high level, the restriction load is preferably 20 kN or more, and more preferably 25 kN or more (a surface pressure of 1.2 MPa or more).

In such a state where the battery case 10 is pressed, the battery assembly 100A is charged. The battery assembly 100A can be charged similarly to the conventional charging. Typically, an external power source is connected between the positive electrode terminal and the negative electrode terminal of the battery assembly 100A, and charging is performed until the voltage between the positive and negative electrode terminals becomes a predetermined attainment voltage. The battery assembly 100A is charged until the state of charge (SOC) becomes preferably 5% or more, and more preferably 10% or more. The state of charge (SOC) of the battery assembly 100A in this step is preferably 50% or less, more preferably 40% or less, and still more preferably 30% or less. In the case where the nonaqueous electrolyte solution includes the additive, charging is preferably performed until at least the decomposing potential of the additive. The attainment voltage may be set to generally 3 V or more, typically 3.5 V or more, and for example 4 V or more in the case where the negative electrode active material is a carbon material, for example. The charging rate may be, for example, about 0.1 C to 2 C. For example, the charging may be performed once, or twice or more with the discharging conducted between the charging processes. Note that the present step may be performed in the normal temperature (for example, about 25°C ± 10°C, 25°C ± 5°C) environment, or in a high temperature environment of about 45°C, for example. By charging in the high temperature environment, the film formation can be promoted.

In the defoaming step (step 4), after the initial charging step, the gas in the battery case 10, for example air, gas generated by the decomposition of the nonaqueous electrolyte solution in the initial charging step, and the like are discharged to the outside of the battery case 10. The gas can be discharged by, for example, decompressing the inside of the battery case 10. Then, in the liquid injection hole sealing step (step 5), the liquid injection hole 15 is sealed with the sealing member 16 preferably with the inside of the battery case 10 kept at the normal pressure or decompressed. Thus, the battery case 10 is hermetically sealed (closed). The battery 100 can be manufactured suitably as above.

### <Application of battery 100>

The battery 100 is usable in various applications, and can be suitably used as a motive power source for a motor (power source for driving) that is mounted in a vehicle such as a passenger car or a truck because of having the high capacity and the excellent battery characteristic, for example. The vehicle is not limited to a particular type, and may be, for example, a plug-in hybrid electric vehicle (PBEV), a hybrid electric vehicle (HEV), or a battery electric vehicle (BEV). The battery 100 can also be suitably used as a battery pack in which the plurality of batteries 100 are arranged in a predetermined arrangement direction and a load is applied from the arrangement direction by a restriction mechanism.

Several Examples relating to the present disclosure will be explained below, but the present disclosure is not meant to be limited to these Examples.

### <Manufacture of battery for evaluation>

In the constructing step (step 1), a plurality of battery assemblies with the same structure (Examples 1 to 3, Comparative Examples 1 to 3) were constructed. Specifically, first, a lithium nickel cobalt manganese complex oxide (LiNi_{0.6}Co_{0.2}Mn_{0.2}O₂, NCM-Zr) doped with 0.5 mass% of Zr was prepared as the positive electrode active material. Then, a positive electrode sheet with a band shape including, on an aluminum foil as the positive electrode current collector, the positive electrode active material layer including this positive electrode active material, a carbon material (AB) as the conductive material, and PVdF as the binder in a mass ratio of NCM-Zr:AB:PVdF = 97.5:1.5:1.0 was manufactured. In addition, a negative electrode sheet with a band shape including, on a copper foil as the negative electrode current collector, the negative electrode active material layer including graphite (C) as the negative electrode active material, and SBR and CMC as the binder in a mass ratio of C:(SBR + CMC) = 98.5:1.5 was manufactured.

Next, the positive electrode sheet and the negative electrode sheet that were manufactured as above were disposed to face each other through a separator sheet and wound in a flat shape; thus, the wound electrode body was manufactured. Note that as the separator sheet, a separator sheet including a heat resistance layer (also functioning as an adhesive layer) including alumina and PVdF on a surface of a base material part made of PE was used. The total height including the curved part of the wound electrode body was 94 mm, the height Ha of the flat part (the height of the negative electrode active material layer) was 81 mm, and the length La of the negative electrode active material layer in the long side direction was 286 mm.

Next, the nonaqueous electrolyte solution was prepared in a manner that LiPF₆ was dissolved in a mixed solvent in which EC, EMC, and DMC were mixed, and LiBOB, LiSO₃F, and LiPO₂F₂ were added thereto as the additives so that each had a concentration of 0.05 mol/L. Then, the wound electrode body and the nonaqueous electrolyte solution manufactured as above were accommodated in the battery case and thus, the battery assembly with a cuboid shape was constructed. In this manner, the plurality of battery assemblies with the same structure were constructed.

In the compressed impregnation step (step 2), compression and decompression shown in Table 1 were repeated by the number of times shown in Table 1. In each of Examples 1 and 2 and Comparative Examples 1 and 2, the battery assembly was accommodated in the chamber in which the pressure can be regulated, the pressure was applied from the normal pressure state to 0.8 MPa for one minute while the liquid injection hole was kept open, the state of 0.8 MPa was kept for six minutes, the pressure was reduced to the normal pressure state in one minute, and the normal pressure was kept for one minute; this process was repeated 20 times in total. On the other hand, in Example 3 and Comparative Example 3, the present step was not performed (the present step was omitted) as shown in Table 1.

In the initial charging step (step 3), first, the pressing member as illustrated in FIG. 8 was prepared. Here, the length L of the pressing member in the long side direction was 290 mm, which was longer than the length La (286 mm) of the negative electrode active material layer in the long side direction, and the height H of the pressing member was 75 mm, which was shorter than the height Ha (81 mm) of the flat part of the wound electrode body. Next, the pressing member was disposed based on the center of the long side wall of the constructed battery assembly, and the battery assembly and the pressing member were restricted with the restriction load shown in Table 1. Thus, a part of the flat part of the wound electrode body where the positive electrode active material layer and the negative electrode active material layer faced each other was restricted by the pressing member. In the long side direction, the flat part of the wound electrode body was pressed by the pressing member in the range from the vicinity of the root of the positive electrode tab group to the vicinity of the root of the negative electrode tab group. In the long side direction, left and right ends of the pressing member are 9 mm apart from the short side walls. In the height direction, an upper end of the pressing member is 14 mm apart from the sealing plate and a lower end of the pressing member is 14 mm apart from the bottom wall. Next, the battery assembly with the restriction load applied thereto was charged at a charging rate of 0.2 C to an SOC of 12%. In this manner, the batteries for evaluation (Examples 1 to 3 and Comparative Examples 1 to 3) were manufactured.

### [Table 1]

**Table 1**

| | Compressed impregnation step | | | | | Initial charging step | Negative electrode active material layer | | |
|---|---|---|---|---|---|---|---|---|---|
| | Compression | | Decompression | | The number of repetitions | Restriction load | First high-resistance region | | Central part high-resistance region |
| | Pressure | Holding time | Pressure | Holding time | | | Present Absent | Length L1/La | Resistance ratio* Rm/Rs |
| Example 1 | 0.8 MPa | 6 minutes | Normal pressure | 1 minute | 20 times | 27 kN | Present | 0.31 | 1.49 |
| Example 2 | 0.8 MPa | 6 minutes | Normal pressure | 1 minute | 20 times | 25 kN | Present | 0.35 | 1.49 |
| Example 3 | None | | | | | 27 kN | Present | 0.31 | 1.7 |
| Comparative Example 1 | 0.8 MPa | 6 minutes | Normal pressure | 1 minute | 20 times | 17 kN | Present | 0.49 | - |
| Comparative Example 2 | 0.8 MPa | 6 minutes | Normal pressure | 1 minute | 20 times | 8 kN | Present | 0.66 | - |
| Comparative Example 3 | None | | | | | 8 kN | Present | 0.99 | - |

| | | | | | | | | | |
|---|---|---|---|---|---|---|---|---|---|
| *The ratio of the resistance value Rm at the 0.5La position to the resistance value Rs at the 0.25La position | | | | | | | | | |

### <Disassembling of battery for evaluation>

First, the battery for evaluation after the initial charging was discharged until the voltage became 3.0 V and disassembled in a dry air atmosphere (for example, with a dew point of about -50°C), and then, the wound electrode body was extracted from the battery case. After that, the winding of the wound electrode body was unfastened to separate the negative electrode.

### <Measurement of resistance ratio (Rm/Rs) of central part high-resistance region>

First, the negative electrode was cut out into the suitable size (for example, see FIG. 7) along the width direction (the same as the long side direction of the battery for evaluation) and cleaned with DMC; thus, a test body for resistance measurement was obtained. Next, a resistance inspection device including a placement part that accommodates the test body and the nonaqueous electrolyte solution, a probe to be brought into contact with a measurement point, and an AC impedance measurement part was prepared. Regarding a device structure of the resistance inspection device, for example, Japanese Patent Application Publication No. 2014-25850 can be referred to. The probe includes a tubular main body part that accommodates the nonaqueous electrolyte solution and a counter electrode (metal Li) and a measurement part continuing from a lower end of the main body part to be in contact with a part (measurement point) of the negative electrode active material layer of the test body, for example, and is configured to be able to move along a width direction of the test body. The measurement part has a diameter of about Φ1 mm to 10 mm, for example. The AC impedance measurement part is configured to measure the impedance by inputting AC or AC voltage between a working electrode in contact with the negative electrode tab and the measurement point (counter electrode) in contact with the measurement point of the probe.

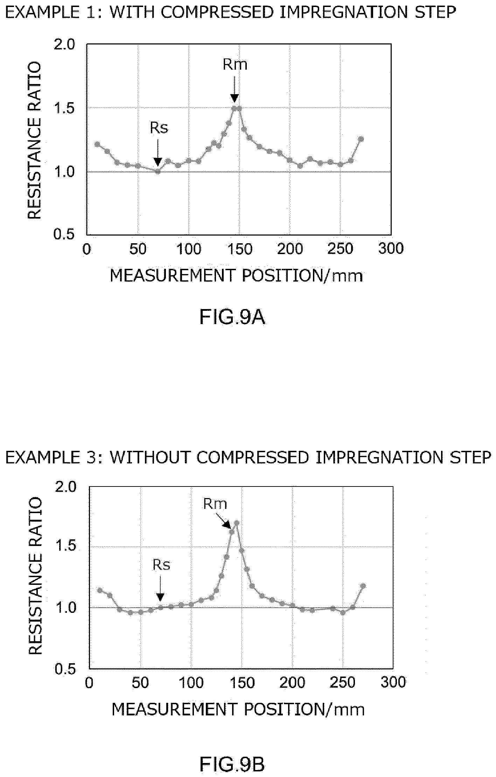

Next, the placement part of the resistance inspection device was filled with the nonaqueous electrolyte solution (only the nonaqueous solvent and the supporting salt were used, and the additive was not added), and the test body was disposed in the placement part. Subsequently, a part where an end part on one side of the negative electrode active material layer (an end part on a side where the negative electrode tab was provided, right end part in FIG. 7) was not deep black (that is, a part where the high-resistance region was not formed) was chosen with eyes. Then, with the working electrode in contact with the negative electrode tab, the probe was moved at predetermined intervals along the width direction of the negative electrode active material layer and the resistance on the surface of the negative electrode active material layer was measured in spots in accordance with the AC impedance method. Specifically, a difference in resistance from DC to an impedance arc terminal was acquired for each measurement point. Note that the measurement interval was about 10 mm, and the measurement was performed at 30 points in total. Subsequently, a value of reaction resistance was read from the Cole-Cole plot, and the resistance value Rs at the reference position that is 0.25La from one end part was standardized as a reference (1). Then, the resistance distribution expressing a relation between the measurement point and the resistance ratio was created. As one example, FIG. 9A expresses the resistance distribution in Example 1 and FIG. 9B expresses the resistance distribution in Example 3. In addition, regarding Examples 1 to 3, a ratio (Rm/Rs) of the resistance value Rm at the central position that is 0.5La to the resistance value Rs at the reference position that is 0.25La is shown in Table 1.

As shown in Table 1, the resistance ratio (Rm/Rs) was 1.7 in Example 3 in which the compressed impregnation step (step 2) was not performed; that is, the resistance value Rm at the central position was 1.7 times the resistance value Rs at the reference position, which was large. On the other hand, in Examples 1 and 2 in which the compressed impregnation step (step 2) was performed, the resistance ratio (Rm/Rs) was 1.49, and the resistance value Rm at the central position was 1.49 times the resistance value Rs at the reference position, which was small. Accordingly, it has been understood that the resistance value Rm at the central position is suitably adjustable by the compressed impregnation step. Moreover, here, the resistance ratio (Rm/Rs) was able to be made 1.5 or less by performing the compression or decompression as shown in Table 1 in the compressed impregnation step.

### <Measurement of length of first high-resistance region>

In accordance with the following procedure, the presence or absence of the first high-resistance region (the high-resistance region extending from the end part on the side where the negative electrode tab was provided to the central part in the width direction) was checked. (1) First, the region that is more deep black than a periphery was recognized with eyes regarding the end part on one side of the negative electrode active material layer (the end part on the side where the negative electrode tab was provided, the right end part in FIG. 7). (2) Next, the resistance (resistance value A) was measured by a method similar to the above method about a central side end part of the deep black region that is closest to the center M_{Y} of the negative electrode active material layer (see FIG. 7). (3) Subsequently, the resistance (resistance value B) was measured by a method similar to the above method about a part that is closer to the center M_{Y} than the central side end part (outside the deep black region). (4) Then, the first high-resistance region is determined to be "present" when a ratio (resistance value A/Rs) of the resistance value A to the resistance value Rs at the reference position is 1.5 or more and a ratio (resistance value B/Rs) of the resistance value B to the resistance value Rs at the reference position is less than 1.5. The results are shown in Table 1.

As shown in Table 1, the first high-resistance region was recognized in all the test examples. Therefore, the length from the end part on one side of the negative electrode active material layer to the central side end part of the deep black region in the above (2) was measured with a ruler and this length was used as the length L1 of the first high-resistance region in the width direction (winding axis direction). Then, a ratio (L1/La) of the length L1 of the first high-resistance region to the total length La of the negative electrode active material layer in the width direction (286 mm) was calculated. The results are shown in Table 1.

As shown in Table 1, in Comparative Example 1 to Comparative Example 3, the ratio (L1/La) was relatively large and particularly in Comparative Example 3, L1 extended to be substantially equal to the total length La of the negative electrode active material layer in the width direction. On the other hand, in Examples 1 to 3 in which the high restriction load was applied to the battery assembly in the initial charging step, the ratio (L1/La) was suppressed to be small relatively. Therefore, it has been understood that the length L1 is suitably adjustable by, for example, the conditions in the compressed impregnation step or the conditions in the initial charging step, particularly the restriction position or the restriction load in the initial charging step. In addition, here, the ratio (L1/La) was able to be made 0.35 or less by using the pressing member with a size of 290 mm in width and 75 mm in height and applying a restriction load of 25 kN or more to the battery assembly from the long side wall side in the initial charging step.

The results of the present inventor's analysis of the components of the first high-resistance region through laser ablation inductively coupled plasma mass spectrometry (LA-ICP-MS) indicates that the components such as B, P, S, Mn, Zr, and Cu were contained in large quantity, the detailed description of which is omitted. B, P, and S are the components derived from the nonaqueous electrolyte solution (for example, the additive). Thus, it has been presumed that the nonaqueous electrolyte solution existed in large quantity in the vicinity of the first high-resistance region. Mn and Zr are the components derived from the positive electrode active material, and Cu is the component derived from the negative electrode current collector. The part where the nonaqueous electrolyte solution existed in large quantity suggests that metal precipitation of Mn, Zr, Cu, and the like was also in large quantity.

Additionally, the results of analyzing the first high-resistance region and the part where the color did not change (part other than the first high-resistance region) through nuclear magnetic resonance (NMR) indicate that the organic film was formed in larger quantity relatively in the first high-resistance region. Accordingly, it has been considered that, in the place where the metals such as Mn, Zr, and Cu precipitated, the organic film increased because the side reaction such as decomposition of the nonaqueous solvent was promoted and thus, the first high-resistance region A1 was formed.

Although some embodiments of the present disclosure have been described above, these embodiments are just examples. The present disclosure can be implemented in various other modes. The present disclosure can be implemented based on the contents disclosed in this specification and the technical common sense in the relevant field. The techniques described in the scope of claims include those in which the embodiments exemplified above are variously modified and changed. For example, a part of the aforementioned embodiment can be replaced by another modified example, and the other modified example can be added to the aforementioned embodiment. Additionally, the technical feature may be deleted as appropriate unless such a feature is described as an essential element.

As described above, the following items are given as specific aspects of the art disclosed herein.
Item 1: The nonaqueous electrolyte solution secondary battery including: the wound electrode body in which the positive electrode with a band shape and the negative electrode with a band shape are stacked across the separator with a band shape and wound; the nonaqueous electrolyte solution; the battery case that accommodates the wound electrode body and the nonaqueous electrolyte solution; the positive electrode terminal that is electrically connected to the positive electrode through the positive electrode current collecting part; and the negative electrode terminal that is electrically connected to the negative electrode through the negative electrode current collecting part, in which the negative electrode includes the negative electrode active material layer including the negative electrode active material, and the plurality of negative electrode tabs provided at one end part in the winding axis direction, the plurality of negative electrode tabs are connected to the negative electrode current collecting part in the state of being stacked and bent, the negative electrode active material layer includes the first high-resistance region extending from the one end part toward the central part in the winding axis direction and having the resistance value that is 1.5 times or more higher than that in the periphery, and when the length of the negative electrode active material layer is La and the length of the first high-resistance region is L1 in the winding axis direction, the ratio (L1/La) of the length L1 of the first high-resistance region to the length La of the negative electrode active material layer is 0.35 or less.
Item 2: The nonaqueous electrolyte solution secondary battery according to Item 1, in which the length La of the negative electrode active material layer in the winding axis direction is 200 mm or more.
Item 3: The nonaqueous electrolyte solution secondary battery according to Item 1 or 2, in which the negative electrode includes the negative electrode current collector containing copper or a copper alloy.
Item 4: The nonaqueous electrolyte solution secondary battery according to any one of Items 1 to 3, in which the positive electrode includes the lithium manganese containing complex oxide as the positive electrode active material.
Item 5: The nonaqueous electrolyte solution secondary battery according to Item 4, in which the positive electrode active material contains the zirconium element.
Item 6: The nonaqueous electrolyte solution secondary battery according to any one of Items 1 to 5, in which the nonaqueous electrolyte solution includes the lithium salt containing the phosphorus element.
Item 7: The nonaqueous electrolyte solution secondary battery according to any one of Items 1 to 6, in which the nonaqueous electrolyte solution includes the lithium salt containing the boron element.
Item 8: The nonaqueous electrolyte solution secondary battery according to any one of Items 1 to 7, in which the nonaqueous electrolyte solution includes the lithium salt containing the sulfur element.
Item 9: The nonaqueous electrolyte solution secondary battery according to any one of Items 1 to 8, in which the negative electrode and the separator are attached to each other by the adhesive layer.
Item 10: The nonaqueous electrolyte solution secondary battery according to any one of Items 1 to 9, in which when the resistance distribution is measured along the winding axis direction in a part of the negative electrode active material layer where the first high-resistance region is not formed, the resistance value at the central position that is 0.5La from the one end part is 1.5 times or less the resistance value at the reference position that is 0.25La from the one end part.
Item 11: The nonaqueous electrolyte solution secondary battery according to any one of Items 1 to 10, in which the positive electrode includes the plurality of positive electrode tabs provided at the other end part in the winding axis direction, the plurality of positive electrode tabs are connected to the positive electrode current collecting part in the state of being stacked and bent, the negative electrode active material layer includes the second high-resistance region extending from the other end part toward the central part in the winding axis direction and having the resistance value that is 1.5 times or more higher than that in the periphery, and when the length of the second high-resistance region is L2 in the winding axis direction, the ratio (L2/La) of the length L2 of the second high-resistance region to the length La of the negative electrode active material layer is 0.35 or less.

### [Reference Signs List]

10 Battery case
20 Electrode body group
20a, 20b, 20c Wound electrode body
22 Positive electrode
22t Positive electrode tab
23 Positive electrode tab group
24 Negative electrode
24a Negative electrode active material layer
24c Negative electrode current collector
24t Negative electrode tab
25 Negative electrode tab group
26 Separator
100 Battery
A1 First high-resistance region
A2 Second high-resistance region
La Length of negative electrode active material layer
L1 Length of first high-resistance region
L2 Length of second high-resistance region

## Claims

1. A nonaqueous electrolyte solution secondary battery (100) comprising:
a wound electrode body (20) in which a positive electrode (22) with a band shape and a negative electrode (24) with a band shape are stacked across a separator (26) with a band shape and wound;
a nonaqueous electrolyte solution;
a battery case (10) that accommodates the wound electrode body (20) and the nonaqueous electrolyte solution;
a positive electrode terminal (30) that is electrically connected to the positive electrode (22) through a positive electrode current collecting part (50); and
a negative electrode terminal (40) that is electrically connected to the negative electrode (24) through a negative electrode current collecting part (60), wherein
the negative electrode (24) includes a negative electrode active material layer (24a) including a negative electrode active material, and a plurality of negative electrode tabs (24t) provided at one end part in a winding axis direction (Y),
the plurality of negative electrode tabs (24t) are connected to the negative electrode current collecting part (60) in a state of being stacked and bent,
the negative electrode active material layer (24a) includes a first high-resistance region (A1) extending from the one end part toward a central part in the winding axis direction (Y) and having a resistance value that is 1.5 times or more higher than that in a periphery, and
when a length of the negative electrode active material layer (24a) is La and a length of the first high-resistance region (A1) is L1 in the winding axis direction (Y), a ratio (L1/La) of the length L1 of the first high-resistance region (A1) to the length La of the negative electrode active material layer (24a) is 0.35 or less.

2. The nonaqueous electrolyte solution secondary battery (100) according to claim 1, wherein the length La of the negative electrode active material layer (24a) in the winding axis direction (Y) is 200 mm or more.

3. The nonaqueous electrolyte solution secondary battery (100) according to claim 1 or 2, wherein the negative electrode (24) includes a negative electrode current collector (24c) containing copper or a copper alloy.

4. The nonaqueous electrolyte solution secondary battery (100) according to any one of claims 1 to 3, wherein the positive electrode (22) includes a lithium manganese containing complex oxide as a positive electrode active material.

5. The nonaqueous electrolyte solution secondary battery (100) according to claim 4, wherein the positive electrode active material contains a zirconium element.

6. The nonaqueous electrolyte solution secondary battery (100) according to any one of claims 1 to 5, wherein the nonaqueous electrolyte solution includes a lithium salt containing a phosphorus element.

7. The nonaqueous electrolyte solution secondary battery (100) according to any one of claims 1 to 6, wherein the nonaqueous electrolyte solution includes a lithium salt containing a boron element.

8. The nonaqueous electrolyte solution secondary battery (100) according to any one of claims 1 to 7, wherein the nonaqueous electrolyte solution includes a lithium salt containing a sulfur element.

9. The nonaqueous electrolyte solution secondary battery (100) according to any one of claims 1 to 8, wherein the negative electrode (24) and the separator (26) are attached to each other by an adhesive layer.

10. The nonaqueous electrolyte solution secondary battery (100) according to any one of claims 1 to 9, wherein when a resistance distribution is measured along the winding axis direction (Y) in a part of the negative electrode active material layer (24a) where the first high-resistance region (A1) is not formed, a resistance value (Rm) at a central position (M_{Y}) that is 0.5La from the one end part is 1.5 times or less a resistance value (Rs) at a reference position that is 0.25La from the one end part.

11. The nonaqueous electrolyte solution secondary battery (100) according to any one of claims 1 to 10, wherein
the positive electrode (22) includes a plurality of positive electrode tabs (22t) provided at the other end part in the winding axis direction (Y),
the plurality of positive electrode tabs (22t) are connected to the positive electrode current collecting part (50) in a state of being stacked and bent,
the negative electrode active material layer (24a) includes a second high-resistance region (A2) extending from the other end part toward the central part in the winding axis direction (Y) and having a resistance value that is 1.5 times or more higher than that in a periphery, and
when a length of the second high-resistance region (A2) is L2 in the winding axis direction (Y), a ratio (L2/La) of the length L2 of the second high-resistance region (A2) to the length La of the negative electrode active material layer (24a) is 0.35 or less.
